# EUROPEAN PATENT SPECIFICATION

(11) **EP 0 540 053 B1**
(45) Date of publication and mention of the grant of the patent: **15.05.1996**
(21) Application number: 92118729.0
(22) Date of filing: 02.11.1992
(51) Int. Cl.: B60J 5/06, E05D 15/10

(54) **A locating arrangement for a vehicle door**
Positionierungsvorrichtung für Fahrzeugtür
Dispositif de positionnement pour porte de véhicule

(30) Priority: 31.10.1991 GB 9123108
(43) Date of publication of application: 05.05.1993
(73) Proprietor: FORD MOTOR COMPANY LIMITED, Brentwood Essex (GB); FORD-WERKE AKTIENGESELLSCHAFT, D-50725 Köln (DE); FORD FRANCE S. A., F-92506 Rueil-Malmaison Cédex (FR)
(72) Inventor: Crawley, Graham John, Billericay, Essex (GB)
(74) Representative: Messulam, Alec Moses

(56) References cited:
- EP-A- 0 103 734
- EP-A- 0 357 542
- DE-A- 3 310 559
- US-A- 3 312 015
- PATENT ABSTRACTS OF JAPAN vol. 006, no. 253 (M-178)11 December 1982 & JP-A-57 147 923 (TOYO KOGYO K.K.) 13 September 1982

## Description

This invention relates to a locating arrangement for locating the leading edge of a sliding vehicle door.

The document JP-A-57 147 923 discloses a wedge structure for a car slide door. The structure has a male component that seats with a female component in order to reduce the shock when the door is closed. The male component is made from a soft rubber or the like and has flexible lips on opposite sides which when seated with the female component prevent vibration of the door.

It is an object of the invention to provide a locating arrangement whereby the door can be prevented from rattling in a simple and cost-effective way.

According to the invention, there is provided a locating arrangement for the leading edge of a sliding vehicle door, the arrangement comprising a projection mounted on one of the door or the door frame and a recess mounted on the other of the door or the door frame, the projection and the recess being arranged so that the projection is received in the recess when the door is closed, wherein one wall of the recess is constructed as a resilient tongue which extends towards an opposite wall of the recess and is moulded in one piece with other walls of the recess.

The use of a resilient, integrally moulded tongue has the advantage that the recess can be formed relatively cheaply, and in only one moulding. The use of the resiliently moulded tongue enables any play between the projection and the walls of the recess to be taken up when the door is closed.

Preferably the recess is formed as part of a plastics component to be mounted on an edge of the door or the door frame. It is preferred for the recess to be mounted on the door frame and for the projection to be mounted on the door, but the opposite arrangement is also possible.

The projection is preferably wedge-shaped and may also be formed as part of a separate component which can be fixed to the door or the door frame.

Two or more such location arrangements can be associated with one door.

The invention will now be further described, by way of example, with reference to the accompanying drawing, in which:
Figure 1 is a perspective view of the body shell of a vehicle with a sliding door;
Figure 2 is a cross section through the body shell of the vehicle of Figure 1, on the line A-A; and
Figure 3 is a perspective view of a component including a recess.

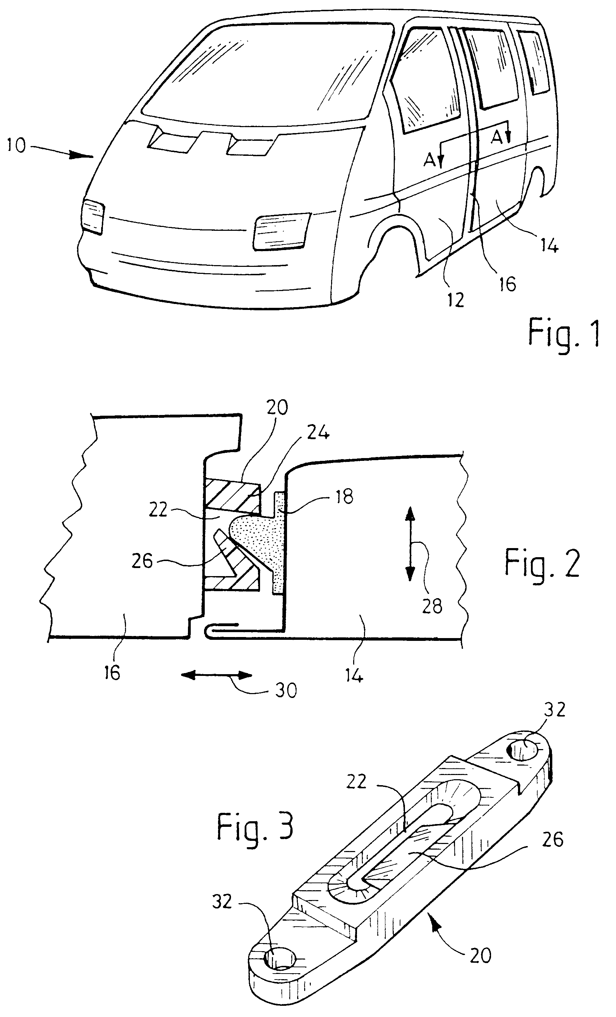

Figure 1 shows a body shell 10 of a van. A front hinged door 12 can be seen, together with a sliding rear door 14. A door pillar 16 is located at the rear of the front door 12 and at the front of the sliding door 14. Both the front door 12 and the sliding door 14 shut onto surfaces located on the pillar 16.

Figure 2 shows a cross section through part of the pillar 16 and through the leading edge of the door 14. The door 14 carries a wedge shaped projection 18. Although Figure 2 shows this projection 18 as being part of a separate component attached to the leading edge of the door, the projection could also be formed by suitably shaping the sheet metal forming the leading edge of the door itself.

On the pillar 16 is a component 20 which forms a recess 22. On one side this recess is formed by a fixed wall 24. On the other side the recess is bounded by a flexible tongue 26. The tongue 26 is directed towards the wall 24 so that as the projection 18 enters the recess, the tongue 26 will be pushed back to open the recess. Because of the flexible nature of the tongue 26, the projection 18 will always be tightly gripped in the recess so that there can be no relative movement, in the direction indicated by the double headed arrow 28, between the door 14 and the pillar 16.

A separate latch mechanism (not shown) will control the relative positions of the door 14 and the pillar 16, in the direction indicated by the double headed arrow 30.

The component 20 is shown in more detail in Figure 3. This component is a plastics moulding, suitably of glass-filled polyamide and is secured to the door frame 16 by fastenings passing through holes 32 in the component. The component has an elongate recess 22, with one long side of the recess being formed as the tongue 26.

Conveniently two such components are mounted spaced apart along the height of the door frame 16.

The construction of the component 20 as a one-piece moulding has considerable cost savings over constructions which require a component made up of several different parts.

## Claims

1. A locating arrangement for the leading edge of a sliding vehicle door (14), the arrangement comprising a projection (18) mounted on one of the door (14) or the door frame (16) and a recess (22) mounted on the other of the door (14) or the door frame (16), the projection (18) and the recess (22) being arranged so that the projection (18) is received in the recess (22) when the door is closed, characterised in that at the open end of the recess (22) one wall thereof has a resilient tongue (26) which extends towards an opposite wall of the recess and is moulded in one piece with other walls of the recess.

2. A locating arrangement as claimed in Claim 1, wherein the projection (18) is mounted on the door (14) and the recess (22) is mounted on the door frame (16).

3. A locating arrangement as claimed in Claim 1 or Claim 2, wherein there are two projections (18) and two corresponding recesses (22).

4. A locating arrangement as claimed in any preceding claim, wherein the projection (18) is formed in a separate component mounted on either the door (14) or the door frame (16).

5. A locating arrangement as claimed in any preceding claim, wherein the recess (22) is formed in a component (20) which is secured to the door frame (16) or the door (14).

6. A locating arrangement as claimed in Claim 5, wherein the component (20) is moulded from a polyamide material.

7. A component (20) for use as part of a locating arrangement as claimed in any preceding claim, the component (20) comprising a recess (22) bounded by walls, wherein one wall is constructed as a resilient tongue (26) which extends towards an opposite wall (24) of the recess (22) and is moulded in one piece with other walls of the recess (22).

## Patentansprüche

1. Eine Positionierungsvorrichtung für die Vorderkante einer Fahrzeugschiebetür (14), die Positionierungsvorrichtung umfassend einen Vorsprung (18), der an der Tür (14) oder dem Türrahmen (16) befestigt ist, und eine Vertiefung (22), die jeweils am Türrahmen (16) oder an der Tür (14) befestigt ist, wobei der Vorsprung (18) und die Vertiefung (22) so angeordnet sind, daß der Vorsprung (18) beim Schließen der Tür von der Vertiefung (22) aufgenommen wird, dadurch gekennzeichnet, daß am offenen Ende der Vertiefung (22) eine Wand davon eine elastische Zunge (26) besitzt, die sich zu einer gegenüberliegenden Wand der Vertiefung erstreckt und zusammen mit den anderen Wänden der Vertiefung aus einem Stück geformt ist.

2. Eine Positionierungsvorrichtung nach Anspruch 1, worin der Vorsprung (18) an der Tür (14) und die Vertiefung (22) am Türrahmen (16) befestigt ist.

3. Eine Positionierungsvorrichtung nach Anspruch 1 oder Anspruch 2, die zwei Vorsprünge (18) und zwei entsprechende Vertiefungen (22) besitzt.

4. Eine Positionierungsvorrichtung nach irgendeinem der vorhergehenden Ansprüche, worin der Vorsprung (18) in einer gesonderten Komponente gebildet ist, die entweder an der Tür (14) oder am Türrahmen (16) befestigt ist.

5. Eine Positionierungsvorrichtung nach irgendeinem der vorhergehenden Ansprüche, worin die Vertiefung (22) in einer Komponente (20) gebildet ist, die am Türrahmen (16) oder an der Tür (14) befestigt ist.

6. Eine Positionierungsvorrichtung nach Anspruch 5, worin die Komponente (20) aus Polyamid geformt ist.

7. Eine Komponente (20) zur Verwendung als Teil einer Positionierungsvorrichtung nach irgendeinem der vorhergehenden Ansprüche, wobei die Komponente (20) eine von Wänden begrenzte Vertiefung (22) umfaßt, worin eine der Wände als elastische Zunge (26) ausgeführt ist, die sich zu einer gegenüberliegenden Wand (24) der Vertiefung (22) erstreckt und mit den anderen Wänden der Vertiefung (22) aus einem Stück geformt ist.

## Revendications

1. Arrangement de positionnement pour l'arête menante d'une porte coulissante de véhicule (14), l'arrangement comprenant une projection (18) montée sur la porte (14) ou le cadre de porte (16) et un évidement (22) monté respectivement sur le cadre de porte (16) ou la porte (14), la projection (18) et l'évidement (22) étant disposés de sorte que la projection (18) est reçue dans l'évidement (22) lorsque la porte est fermée, caractérisé en ce que, à l'extrémité ouverte de l'évidement (22), une paroi de celui-ci présente une langue résiliente (26) qui s'étend vers une paroi opposée de l'évidement et est moulée en une pièce avec les autres parois de l'évidement.

2. Arrangement de positionnement selon la revendication 1, dans lequel la projection (18) est montée sur la porte (14) et l'évidement (22) est monté sur le cadre de porte (16).

3. Arrangement de positionnement selon la revendication 1 ou 2, dans lequel il y a deux projections (18) et deux évidements correspondants (22).

4. Arrangement de positionnement selon l'une des revendications précédentes, dans lequel la projection (18) est formée dans un composant séparé monté soit sur la porte (14), soit sur le cadre de porte (16).

5. Arrangement de positionnement selon l'une des revendications précédentes, dans lequel l'évidement (22) est formé dans un composant (20) qui est fixé au cadre de porte (16) ou à la porte (14).

6. Arrangement de positionnement selon la revendication 5, dans lequel le composant (20) est moulé à partir d'une matière polyamide.

7. Composant (20) destiné à être utilisé comme une partie d'un arrangement de positionnement selon l'une des revendications précédentes, le composant (20) comprenant un évidement (22) limité par des parois, dans lequel une paroi est construite comme une langue résiliente (26) qui s'étend vers une paroi opposée (24) de l'évidement (22) et est moulée en une pièce avec d'autres parois de l'évidement (22).
